# FASCICULE DE BREVET EUROPEEN

(11) **EP 2 550 866 B1**
(45) Date de publication et mention de la délivrance du brevet: **26.03.2014**
(21) Numéro de dépôt: 12305899.2
(22) Date de dépôt: 24.07.2012
(51) Int. Cl.: A22C 21/00, B65G 17/40

(54) **Chaîne de convoyeur à picots pour dispositif de découpe de volailles**
Fließband mit Zapfen für Vorrichtung zur Geflügelzerteilung
Pin conveyor for poultry cutting device

(30) Priorité: 26.07.2011 FR 1156789
(43) Date de publication de la demande: 30.01.2013
(73) Titulaire: Etablissements J.P. Bayle, 42480 La Fouillouse (FR)
(72) Inventeur: Bayle, Louis-Georges, 42100 Saint-Etienne (FR)
(74) Mandataire: Dupuis, François

(56) Documents cités:
- US-A- 885 959
- US-A- 5 188 559
- US-A1- 2002 112 941

## Description

### DOMAINE DE L'INVENTION

La présente invention concerne le secteur technique des convoyeurs à chaîne et plus particulièrement le domaine des chaînes à picots utilisées dans des dispositifs de découpe de volailles telles que des canards ou des poulets par exemple.

### ARRIERE-PLAN DE L'INVENTION

On connait bien des convoyeurs à chaîne pour transporter des produits agro-alimentaires, tels que des volailles par exemple, entre deux points notamment d'une chaîne de production. Ces convoyeurs à chaîne sont constitués d'une ou plusieurs chaînes entraînés par des pignons dentés. Afin d'améliorer la retenue des produits sur la chaîne, et par conséquent, d'assurer un transport des produits tout le long du convoyeur, une pluralité de maillons de la chaîne comporte avantageusement des moyens de retenue, généralement pointus, communément appelés picots. De tels picots sont indispensables sur un dispositif de découpe de volailles usuellement constitué d'un convoyeur à chaine et de crochets entraînés en translation le long d'un rail au dessus du convoyeur à chaîne, lesdits crochets recevant les cuisses des volailles.

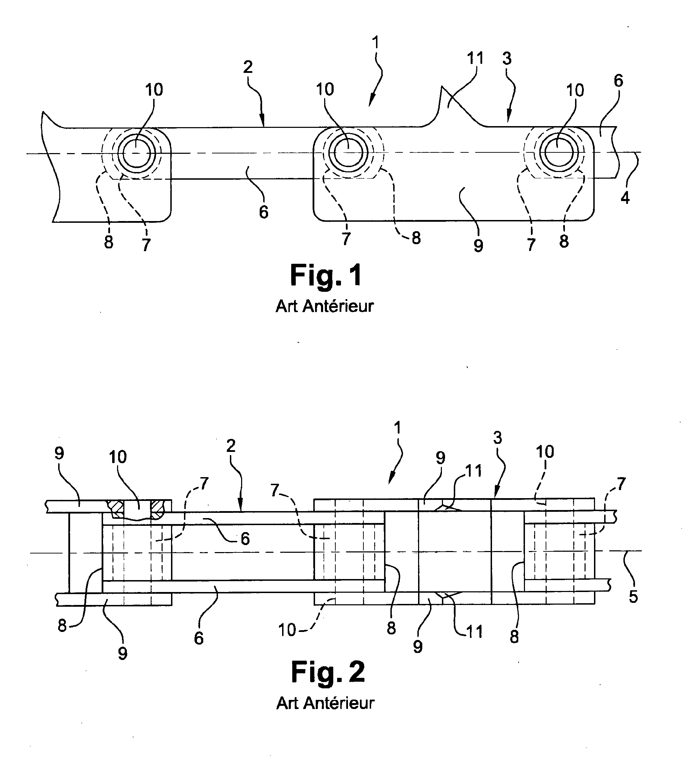

Une telle chaîne à picots d'un convoyeur à chaîne, représentée sur les figures 1 et 2 qui sont respectivement une vue de côté et une vue de dessus d'une chaîne à picots de l'art antérieur, est constituée d'une chaîne dite à rouleaux comportant une succession de deux types de maillons différents disposés alternativement, des maillons intérieurs (2) et des maillons extérieurs (3), ladite chaîne (1) comportant un axe central longitudinal (4) et un plan de symétrie central longitudinal (5).

Les maillons intérieurs (2) sont formés de deux plaques dites intérieures (6) aux extrémités desquelles sont emmanchées deux pièces tubulaires appelés douilles (7). Lesdites douilles (7) sont coiffées par une seconde pièce tubulaire appelée rouleau (8) montée libre en rotation autour des douilles (7).

Les maillons extérieurs (3) sont formés de deux plaques dites extérieures (9) reliées à leurs extrémités par deux axes (10), lesdits axes (10) s'étendant dans les douilles (7) des maillons intérieurs (2) contigus. Lesdits maillons extérieurs (3) comportent, par ailleurs, dans la partie centrale des plaques extérieures (9), des projections (11) pointues de forme sensiblement triangulaire faisant saillie au dessus desdites plaques extérieures (9) pour former des moyens de retenue des produits dits picots. Ces picots (11) pénètrent dans les produits à la manière de harpons pour agripper les produits.

Les chaînes à picots de l'art antérieur présentent l'inconvénient de ne procurer qu'une faible pénétration dans les produits n'assurant pas une retenue suffisante des produits.

Le document US 2002/112941 A1 divulgue une chaîne de convoyeur à chaîne comportant un axe central longitudinal et un plan de symétrie central longitudinal, ladite chaîne étant destinée à se déplacer dans un chemin de chaîne complémentaire, et constituée d'une succession de maillons dits intérieurs et de maillons dits extérieurs articulés deux à deux par des axes, une pluralité de maillons extérieurs comportant des moyens de retenue faisant saillie au dessus desdits maillons dont la base est solidaire d'un maillon.

Par ailleurs, compte tenu de la faible pénétration des picots dans les produits et la faible épaisseur desdits picots, ces derniers procurent une lacération des produits, notamment lorsqu'il s'agit de produits « mous » tels que des volailles par exemple, qui les endommagent.

De plus, la faible épaisseur de ces picots conduit fréquemment à des déformation de ces derniers rendant la chaîne totalement inopérante et nécessitant un remplacement fréquent des maillons extérieurs comportant ces picots. Le remplacement des maillons extérieurs nécessitent un arrêt du convoyeur, et en conséquence de la ligne de production, ce qui grève la rentabilité de la ligne.

Enfin, les volailles transportées par ces convoyeurs à chaîne à picots de l'art antérieur sont généralement mal tenues sur le convoyeur et la découpe, plus particulièrement la séparation des cuisses de la carcasse des volailles, ne s'effectue pas correctement.

### EXPOSE DE L'INVENTION

L'un des buts de l'invention est donc de remédier à ces inconvénients en proposant une chaîne à picots pour convoyeur à chaîne de conception simple et peu onéreuse, et procurant une bonne retenue des produits tout en évitant une lacération de ces derniers.

A cet effet, et conformément à la revendication 1, il est proposé une chaîne de convoyeur à chaîne pour des produits agro-alimentaires, tels que des volailles par exemple, comportant un axe central longitudinal et un plan de symétrie central longitudinal, ladite chaîne étant destinée à se déplacer dans un chemin de chaîne complémentaire, et constituée d'une succession de maillons dits intérieurs et de maillons dits extérieurs articulés deux à deux par des axes, une pluralité de maillons extérieurs et/ou intérieurs comportant des moyens de retenue faisant saillie au dessus desdits maillons ; ladite chaîne est remarquable en ce que lesdits moyens de retenue consistent en une pièce en forme de V inclinée suivant un angle α par rapport à l'axe longitudinal de la chaîne, s'étendant perpendiculairement au plan de symétrie longitudinal de ladite chaîne entre les plaques extérieures du maillon extérieur, et dont la base est solidaire d'un maillon.

On comprend bien que, contrairement aux chaînes à picots de l'art antérieur, les picots ne sont pas issus des plaques extérieures formant les maillons extérieurs mais consistent dans une pièce rapportée en forme de V, robuste, dont les branches forment des picots de retenue des produits, l'inclinaison de ladite pièce de retenue procurant une bonne retenue des produits sans les lacérer et la forme évasée en V des moyens de retenu procure une corbeille évitant le basculement des volailles le long du chemin de convoyage.

Afin d'assurer une retenue optimale des produits, et plus particulièrement des volailles, ladite pièce en forme de V est inclinée dans la direction d'avancement de la chaîne suivant un angle α compris entre 30 et 70°, et de préférence d'environ 45°.

De préférence, la pièce de retenue en forme de V consiste en une plaque sensiblement trapézoïdale dont la petite base est solidarisée sur les bords supérieurs d'un maillon extérieur et dont la grande base comporte un évidement en forme de V, la petite base de la pièce de retenue en forme de V présentant une longueur sensiblement égale à l'écartement entre les plaques extérieures du maillon extérieur, de manière à ce que les branches du V de la pièce de retenue fassent saillie vers l'extérieur des plaques extérieures du maillon extérieur et forment un angle avec le plan de symétrie longitudinal de la chaîne. Ainsi, l'écartement des picots pénétrant les produits à convoyer est plus grand que la largeur de la chaîne améliorant ainsi la retenue des produits.

Avantageusement, les extrémités libres des branches de la pièce de retenue en forme de V présentent des arrêtes tranchantes permettant une meilleure pénétration des moyens de retenue dans les produits, et plus particulièrement les produits mous tels que des volailles par exemple.

Accessoirement, les moyens de retenue comportent une jambe de renfort dont les extrémités sont solidaires respectivement de la base de la pièce de retenue en forme de V et d'un rouleau coiffant une douille dans laquelle s'étend l'axe d'articulation entre le maillon extérieur et un maillon intérieur contigu.

### BREVE DESCRIPTION DES FIGURES

D'autres avantages et caractéristiques ressortiront mieux de la description qui va suivre, d'une unique variante d'exécution, donnée à titre d'exemple non limitatif, de la chaîne à picots conforme à l'invention, en référence aux dessins annexés sur lesquels :
- La figure 1 est une vue de côté d'une chaîne à picots de l'art antérieur,
- La figure 2 est une vue de dessus de la chaîne à picots de l'art antérieur représenté sur la figure 1,
- La figure 3 est une vue en perspective d'un dispositif de découpe de volaille comprenant un convoyeur à chaîne comportant une chaîne à picots conforme à l'invention,
- La figure 4 est une vue en perspective d'un segment de chaîne à picots conforme à l'invention,
- La figure 5 est une vue de côté du segment de chaîne à picots conforme à l'invention représentée sur la figure 4,
- La figure 6 est une vue de dessus du segment de chaîne à picots conforme à l'invention représentée sur les figures 4 et 5,
- La figure 7 est une vue de face du segment de chaîne à picots conforme à l'invention représentée sur les figures 4 à 6,
- La figure 8 est une vue de face d'un segment de chaîne à picots conforme à l'invention avec une carcasse de volaille en prise avant découpage de l'avant cuisse et de la cuisse de ladite volaille,
- La figure 9 est une vue de face d'un segment de chaîne à picots conforme à l'invention avec une carcasse de volaille en prise après découpage de l'avant cuisse et de la cuisse de ladite volaille.

### DESCRIPTION DETAILLEE DE L'INVENTION

Par souci de clarté, dans la suite de la description, les mêmes éléments ont été désignés par les mêmes références aux différentes figures. De plus, les diverses vues en coupe ne sont pas nécessairement tracées à l'échelle.

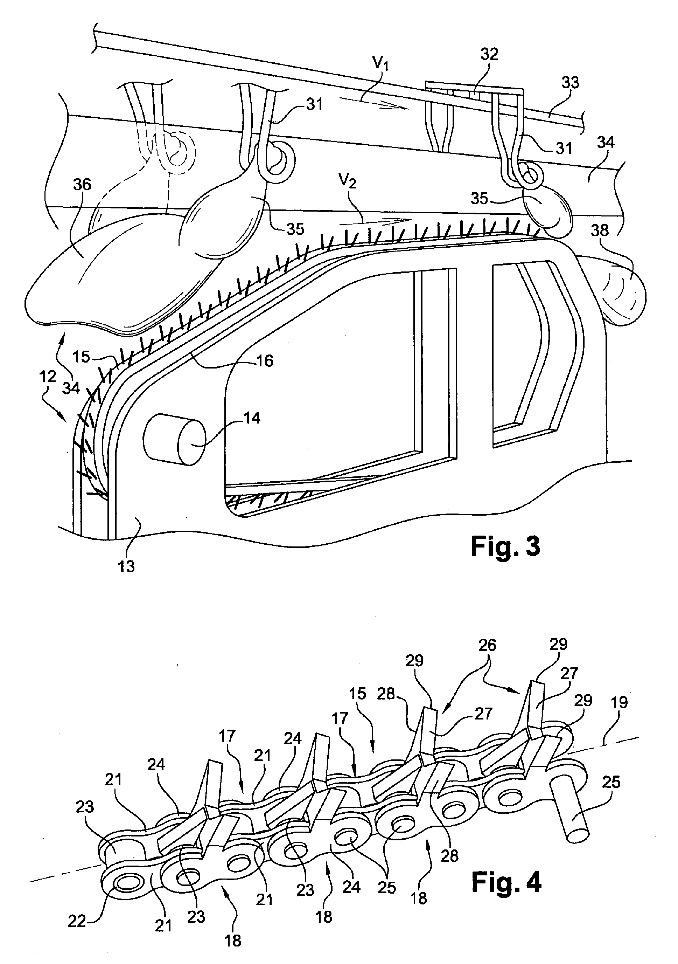

En référence à la figure 3, le convoyeur à chaîne (12) pour produits agro-alimentaires est classiquement constitué d'un bâti (13) portant un ou plusieurs moteurs (14) entraînant des pignons dentés, non représenté sur la figure 3, entre lesquels s'étend une chaîne (15) tendue, ladite chaîne (15) se déplaçant dans un chemin de chaîne complémentaire (16) formé par les bords latéraux du bâti (13).

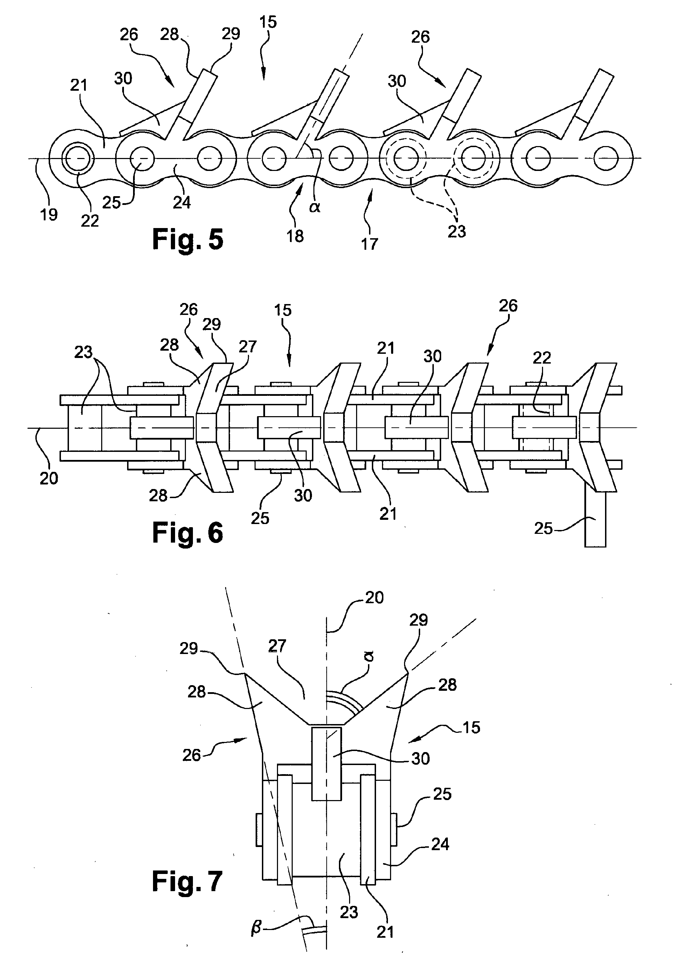

En référence aux figures 4 à 7, ladite chaîne (15) consiste dans une chaîne dite à rouleaux qui est classiquement constituée d'une succession de deux types de maillons différents disposés alternativement, des maillons intérieurs (17) et des maillons extérieurs (18), ladite chaîne (15) comportant un axe central longitudinal (19) et un plan de symétrie central longitudinal (20).

Les maillons intérieurs (17) sont formés de deux plaques intérieures (21) aux extrémités desquelles sont emmanchées deux douilles (22) qui sont respectivement coiffées par un rouleau (23) monté libre en rotation autour desdites douilles (22).

Les maillons extérieurs (18) sont quant à eux formés de deux plaques extérieures (24) reliées à leurs extrémités par deux axes (25), lesdits axes (25) s'étendant dans les douilles (22) des maillons intérieurs (17) contigus.

Par ailleurs, chaque maillon extérieur (18) de ladite chaîne (15) suivant l'invention comporte des moyens de retenue (26) présentant une forme générale de V inclinée suivant un angle α par rapport à l'axe longitudinal (19) de la chaîne (15), dans la direction d'avancement de la chaîne. Dans cet exemple de réalisation particulièrement adapté pour le transport de volailles, ledit angle α est d'environ 45°. Toutefois, ledit angle α pourra être compris entre 30 et 70° en fonction notamment des dimensions et de la consistance des produits à transporter.

Il est bien évident que la chaîne (15) pourra comporter des moyens de retenue (26) sur tout ou partie des maillons extérieurs (18) suivant un pas régulier ou irrégulier déterminé en fonction notamment des dimensions des produits à transporter, sans sortir du cadre de l'invention.

Une telle inclinaison des moyens de retenue dont les branches forment des picots de retenue des produits, procure une bonne retenue des produits sans les lacérer.

Les moyens de retenue (26) en forme de V consistent en une plaque métallique sensiblement trapézoïdale, s'étendant perpendiculairement au plan de symétrie longitudinal (20) de ladite chaîne (15). La petite base de la plaque trapézoïdale formant les moyens de retenue (26) présente une longueur sensiblement égale à l'écartement entre les plaques extérieures (24) du maillon extérieur (18) et est solidarisée, par soudure par exemple, sur les bords supérieurs desdites plaques extérieures (24) du maillon extérieur (18). La grande base de ladite plaque comporte un évidement (27) en forme de V.

Ainsi, les branches (28) du V des moyens de retenue (26) font saillie vers l'extérieur des plaques extérieures (24) du maillon extérieur (18) et forment un angle β avec le plan de symétrie longitudinal (20) de la chaîne (15) et les parois de l'évidement (27) en forme de V forment un angle γ, compris entre 40 et 60°, avec le plan de symétrie longitudinal (20) de la chaîne (15). On observera que, suivant cette configuration, l'écartement des branches (28) des moyens de retenue (26), lesdites branches (28) formant des picots pénétrant les produits à convoyer, est supérieur à la largeur de la chaîne (15) améliorant ainsi la retenue des produits. Notamment, l'évidement (27) en forme de V procure une corbeille dans laquelle prend position les volailles évitant ainsi tout basculement des volailles le long du chemin de convoyage.

Dans cet exemple particulier de réalisation, l'angle β est environ égal à 60° ; toutefois, ledit angle β pourra être compris entre 50 et 70° sans sortir du cadre de l'invention.

Par ailleurs, la plaque métallique formant les moyens de retenue (26) en forme de V présente une épaisseur comprise entre 2 et 8 millimètres, et de préférence de l'ordre de 4 millimètre, et les extrémités libres des branches (28) des moyens de retenue (26) en forme de V présentent des arrêtes tranchantes (29). Ces arrêtes tranchantes (29) qui s'étendent parallèlement au plant de symétrie longitudinal de la chaîne (15) permettent une meilleure pénétration des moyens de retenue (26) dans les produits, et plus particulièrement les produits mous tels que des volailles par exemple.

Afin d'améliorer la robustesse de la chaîne (15) suivant l'invention, les moyens de retenue (26) comportent une jambe de renfort (30) dont les extrémités sont solidaires respectivement de la petite base de la plaque trapézoïdale formant les moyens de retenue (26) en forme de V et du rouleau coiffant la douille dans lequel s'étend l'axe d'articulation entre le maillon extérieur et un maillon intérieur contigu.

Il va de soi que la chaîne (15) pourra consister dans tout type de chaîne (15) bien connue de l'homme du métier telle qu'une chaîne à blocs ou une chaîne à maillon coudée par exemple. De plus, les moyens de retenue (26) pourront être solidaires des maillons extérieurs (18) et/ou intérieurs (17) sans sortir du cadre de l'invention.

Ladite chaîne (15) suivant l'invention est particulièrement adaptée à un dispositif de découpe de volailles tel que représenté sur la figure 3. Ledit dispositif de découpe de volaille comporte un convoyeur à chaîne (12) constitué d'un bâti (13) portant un ou plusieurs moteurs (14) entraînant des pignons dentés, non représentés sur la figure 3, entre lesquels s'étend une chaîne (15) tendue, ladite chaîne (15) se déplaçant dans un chemin de chaîne complémentaire (16) formé par les bords latéraux du bâti (13). Le dispositif comporte par ailleurs des crochets (31) solidaires de chariots (32) entraînés en translation le long d'un rail (33) s'étendant au dessus du convoyeur à chaîne (12), lesdits crochets (31) étant solidarisés par paires aux chariots (32) de telle manière que lesdits crochets s'étendent de part et d'autre du rail (33).

Les chariots (32) sont entraînés en translation le long du rail (33) par tout moyen approprié bien connu de l'homme du métier.

Les crochets (31), destinés à recevoir les extrémités des cuisses des volailles, sont entraînés en translation suivant une vitesse V₁ dans la même direction que la direction d'avancement de la chaîne (15) du convoyeur (12), la vitesse d'entraînement V₂ de la chaîne (15) étant supérieure à la vitesse V₁ des crochets (31), V₂ étant de préférence égale à 2 fois V₁, afin de procurer l'arrachage des cuisses et des avant-cuisses de la carcasse de la volaille.

De plus, le dispositif comporte une glissière (34) positionnées entre le rail (33) et la chaîne (15) du convoyeur (12) et s'étendant juste au dessus de ladite chaîne (15) dans le plan de cette dernière.

On expliquera maintenant le fonctionnement du dispositif de découpe de volailles suivant l'invention en référence aux figures 3, 8 et 9.

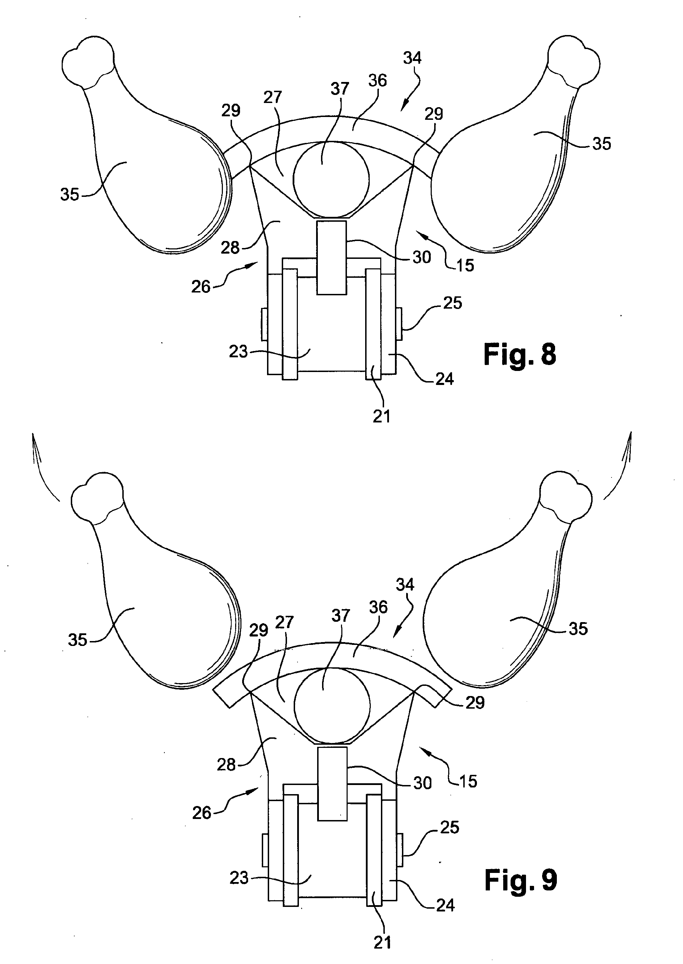

En référence à la figure 3, les volailles (34) sont préalablement étêtées, dévidées, découpées au niveau de la poitrine depuis le croupion jusqu'au cou de telle sorte que la carcasse soit ouverte. De plus, les ailes et les filets sont enlevés. Puis les volailles ainsi préparées sont accrochées aux crochets (31), une cuisse (35) sur chaque crochet (31), pour être transportées jusqu'à l'entrée du dispositif Les carcasses (36) des volailles, entraînées entre la chaîne (15) et la glissière (34), entrent en prise avec la chaîne (15) du convoyeur (12). Les arrêtes tranchantes (29) s'étendant aux extrémités libres des branches (28) des moyens de retenue (26) des maillons de la chaîne (15) pénètrent alors la chaire des carcasses (36), en référence à la figure 8, et le croupion (37) solidaire des carcasses prend appui dans la corbeille formée par le fond de l'évidement (27) des moyens de retenue (26) de la chaîne (15). La différence de vitesse entre la vitesse d'avancement V₁ des crochets (31) et la vitesse d'avancement V₂ de la chaîne (15) procure l'arrachement des avant-cuisses et des cuisses (35) par rapport à la carcasse (36), en référence aux figures 3 et 9.

En référence à la figure 3, les avant-cuisses et les cuisses (35) qui restent accrochées aux crochets (31) poursuivent leur trajet le long du rail (33) jusqu'au prochain dispositif de conditionnement de la chaîne de production et les carcasses (36) sont évacuées, par gravité, sur un tapis de convoyage, non représenté sur la figure 3, pour être emmenées jusqu'à un dispositif de conditionnement des carcasses (36) non représenté sur la figure 3.

Enfin, il est bien évident que les exemples que l'on vient de donner ne sont que des illustrations particulières, en aucun cas limitatives quant aux domaines d'application de l'invention.

## Revendications

1. Chaîne de convoyeur à chaîne pour des produits agro-alimentaires, tels que des volailles par exemple, comportant un axe central longitudinal (19) et un plan de symétrie central longitudinal (20), ladite chaîne (15) étant destinée à se déplacer dans un chemin de chaîne complémentaire (16), et constituée d'une succession de maillons dits intérieurs (17) et de maillons dits extérieurs (18) articulés deux à deux par des axes (25), une pluralité de maillons extérieurs (18) et/ou intérieurs (17) comportant des moyens de retenue (26) faisant saillie au dessus desdits maillons (17,18), **caractérisée en ce que** lesdits moyens de retenue (26) consistent en une pièce en forme de V inclinée suivant un angle α par rapport à l'axe longitudinal (19) de la chaîne (15), s'étendant perpendiculairement au plan de symétrie longitudinal (20) de ladite chaîne (15), et dont la base est solidaire d'un maillon (17,18).

2. Chaîne de convoyeur suivant la revendication 1 **caractérisée en ce que** l'angle α est compris entre 30 et 70°.

3. Chaîne de convoyeur suivant l'une quelconque des revendications 1 ou 2 **caractérisée en ce que** ladite pièce en forme de V (26) est inclinée dans la direction d'avancement de la chaîne (15).

4. Chaîne de convoyeur suivant l'une quelconque des revendications 1 à 3 **caractérisée en ce que** la pièce en forme de V (26) consiste en une plaque sensiblement trapézoïdale dont la petite base est solidarisée sur les bords supérieurs d'un maillon extérieur (18) et dont la grande base comporte un évidement (27) en forme de V.

5. Chaîne de convoyeur suivant la revendication 4 **caractérisée en ce que** la petite base de la pièce en forme de V (26) présente une longueur sensiblement égale à l'écartement entre les plaques extérieures (24) du maillon extérieur (18).

6. Chaîne de convoyeur suivant l'une quelconque des revendications 4 ou 5 **caractérisée en ce que** les branches (28) de la pièce en forme de V (26) font saillie vers l'extérieur des plaques extérieures (24) du maillon extérieur (18) et forment un angle β avec le plan de symétrie longitudinal (20) de la chaîne (15).

7. Chaîne de convoyeur suivant la revendication 6 **caractérisée en ce que** l'angle β est compris entre 50 et 70°.

8. Chaîne de convoyeur suivant l'une quelconque des revendications 4 à 7 **caractérisée en ce que** les parois de l'évidement (27) en forme de V forment un angle γ, compris entre 40 et 60°, avec le plan de symétrie longitudinal (20) de la chaîne (51).

9. Chaîne de convoyeur suivant l'une quelconque des revendications 1 à 8 **caractérisée en ce que** les extrémités libres des branches (28) de la pièce de retenue en forme de V (26) présentent des arrêtes tranchantes (29).

10. Chaîne de convoyeur suivant l'une quelconque des revendications 1 à 9 **caractérisée en ce que** les moyens de retenue (26) comportent une jambe de renfort (30) dont les extrémités sont solidaires respectivement de la base de la pièce en forme de V (26) et d'un rouleau (23) coiffant une douille (22) dans laquelle s'étend l'axe (25) d'articulation entre le maillon extérieur (18) et un maillon intérieur (17) contigu.

11. Application de la chaîne de convoyeur suivant l'une quelconque des revendications 1 à 10 à un dispositif de découpe de volailles comportant un convoyeur à chaîne (12) constitué d'un bâti (13) portant un ou plusieurs moteurs (14) entraînant des pignons dentés entre lesquels s'étend une chaîne (15) tendue, des crochets (31) solidaires de chariots (32) entraînés en translation le long d'un rail (33) s'étendant au dessus du convoyeur à chaîne (12), lesdits crochets (31) étant solidarisés par paires aux chariots (32) de telle manière que lesdits crochets (31) s'étendent de part et d'autre du rail (33), et une glissière (34) positionnées entre le rail (33) et la chaîne (15) du convoyeur (12), ladite glissière (34) s'étendant juste au dessus de ladite chaîne (15) dans le plan de cette dernière,

12. Dispositif de découpe de volailles suivant la revendication 11 **caractérisé en ce que** les crochets (31), destinés à recevoir les extrémités des cuisses des volailles, sont entraînés en translation suivant une vitesse V₁ dans la même direction que la direction d'avancement de la chaîne (15) du convoyeur (12), la vitesse d'entraînement V₂ de la chaîne (15) étant supérieure à la vitesse V₁ des crochets (31), et de préférence égale à 2 fois V₁.

## Patentansprüche

1. Kette für Kettenförderer für Lebensmittelprodukte, wie z. B. Geflügel, umfassend eine zentrale Längsachse (19) und eine longitudinale zentrale Symmetrieebene (20), wobei die genannte Kette (15) dazu bestimmt ist, sich in einem komplementären Kabelweg (16) zu verschieben, und gebildet aus einer Folge von so genannten internen Gliedern (17) und so genannten externen Gliedern (18), die jeweils zu zweit durch Achsen (25) artikuliert sind, wobei eine Vielzahl von externen (18) und/oder internen (17) Gliedern Festhaltemittel (26) umfassen, die über den genannten Gliedern (17, 18) hervorstehen, **dadurch gekennzeichnet, dass** die genannten Festhaltemittel (26) aus einem V-förmigen Teil bestehen, das gemäß einem Windel α im Verhältnis zur Längsachse (19) der Kette (15) geneigt ist, und sich senkrecht zur longitudinalen Symmetrieebene (20) der genannten Kette (15) ersteckt und deren Basis fest mit einem Glied (17, 18) verbunden ist.

2. Kette für Förderer gemäß Anspruch 1, **dadurch gekennzeichnet, dass** der Winkel α zwischen 30 und 70° inbegriffen ist.

3. Kette für Förderer gemäß Anspruch 1 oder 2, **dadurch gekennzeichnet, dass** das genannte V-förmige Teil (26) in der Fortschrittsrichtung der Kette (15) geneigt ist.

4. Kette für Förderer gemäß Anspruch 1 bis 3, **dadurch gekennzeichnet, dass** das V-förmige Teil (26) aus einer deutlich trapezförmigen Platte besteht, deren kleine Basis an den oberen Rändern eines externen Gliedes (18) fest befestigt ist und deren große Basis eine V-förmige Ausnehmung (27) umfasst.

5. Kette für Förderer gemäß Anspruch 4, **dadurch gekennzeichnet, dass** die kleine Basis des V-förmigen Teils (26) eine deutlich gleiche Länge wie den Abstand zwischen den externen Platten (24) des externen Gliedes (18) aufweist.

6. Kette für Förderer gemäß Anspruch 4 oder 5, **dadurch gekennzeichnet, dass** die Zweige (28) des V-förmigen Teils (26) zur Außenseite der externen Platten (24) des externen Gliedes (18) hervorstehen und einen Winkel β mit der longitudinalen Symmetrieebene (20) der Kette (15) bilden.

7. Kette für Förderer gemäß Anspruch 6, **dadurch gekennzeichnet, dass** der Winkel β zwischen 50 und 70° inbegriffen ist.

8. Kette für Förderer gemäß Anspruch 4 bis 7, **dadurch gekennzeichnet, dass** die V-förmige Wände der Ausnehmung (27) mit der longitudinalen Symmetrieebene (20) der Kette (51) einen Winkel γ bilden, der zwischen 40 und 60° inbegriffen ist.

9. Kette für Förderer gemäß Anspruch 1 bis 8, **dadurch gekennzeichnet, dass** die freien Enden der Zweige (28) des V-förmigen Festhaltemittels (26) schneidende Kanten (29) ausweisen.

10. Kette Für Förderer gemäß Anspruch 1 bis 9, dadurch gekennzeichet, dass die Festhaltemittel (26) eine Stützstrebe (30) umfassen, deren Enden jeweils mit der Basis des V-Förmigen Teils (26) und einer Walze (23), die eine Buchse (22) überdeckt, in der sich die Artikulationsachse (25) zwischen dem äußeren Glied (18) und einem aneinanderstoßenden inneren Glied (17) erstreckt, fest verbunden sind.

11. Anwendung der Kette für Förderer gemäß Anspruch 1 bis 10 auf eine Schneid vorrichtung für Geflügel, umfassend einen Kettenförderer (12), der aus einem Gestell (13) besteht, das einen oder mehrere Motoren (14) umfasst, die gezahnte Getrieberäder antreiben, zwischen denen sich eine gespannte Kette (15) erstreckt, Haken (31), die fest mit Laufwagen (32) verbunden sind, die in Translation entlang einer Schiene (33) angetrieben sind, die sich oberhalb des Kettenförderers (12) erstreckt, wobei die genannten Haken (31) jeweils paarweise fest an den Laufwagen (32) derart befestigt sind, dass sich die genannten Haken (31) auf jeder Seite der Schiene (33) erstrecken, und eine Gleitschiene (34), die zwischen der Schiene (33) und der Kette (15) des Kettenförderers (12) positioniert ist, wobei sich die genannte Gleitschiene (34) direkt oberhalb der genannten Kette (15) in der Ebene derselben erstreckt.

12. Schneidvorrichtung für Geflügel gemäß Anspruch 11, **dadurch gekennzeichnet, dass** die Haken (31), die zur Aufnahme der Enden von Hähnchenschenkeln bestimmt sind, in Translation gemäß einer Geschwindigkeit V₁ in derselben Richtung wie der Fortschrittsrichtung der Kette (15) des Förderers (12) angetrieben sind, wobei die Antriebsgeschwindigkeit V₂ der Kette (15) größer ist als die Geschwindigkeit V₁ der Haken (31) und bevorzugt gleich 2 Mal V₁.

## Claims

1. Pin conveyor for agro food products, such as poultry, incorporating a longitudinal central pin (19) and a longitudinal central plane of symmetry (20). The chain (15) moves within a complementary chain path (16), and being composed of a succession of links called "inner links" (17) and links called "outer link" (18) articulated in pairs on pins (25), with multiple outer links (18) and/or inner links (17) integrating a retaining part (26) projecting from the said links (17, 18), **characterized by** the fact that the retaining part (26) consist of an inclined V-shaped part at an angle α in relation to the longitudinal centre line (19) of the chain (15), extending perpendicularly to the longitudinal plane of symmetry (20) of the said chain (15), the base of which is secured to the corresponding link(17, 18).

2. Pin conveyor according to claim 1, **characterized by** the fact that the angle α is between 30 and 70°.

3. Pin conveyor according to either of claims 1 or 2, **characterized by** the fact that the said V-shaped part (26) is inclined in the direction of advance of the chain (15).

4. Pin conveyor according to any of claims I to 3, **characterized by** the fact that the V-shaped part (26) consists of a plate that is approximately trapezoidal, with the small base secured to the upper edges of an outer link (18), with the large base having a V-shaped cavity (27).

5. Pin conveyor according to claim 4, **characterized by** the fact that the small base of the V-shaped part (26) has a length approximately equal to the distance between the outer plates (24) of the outer link (18).

6. Pin conveyor according to either of claims 4 or 5, **characterized by** the fact that the branches (28) of the V-shaped part (26) project towards the exterior of the outer plates (24) of the outer link (18), and form an angle β with the longitudinal plane of symmetry (20) of the chain (15).

7. Pin conveyor according to claim 6, **characterized by** the fact that the angle β is between 50 and 70°.

8. Pin conveyor according to any of claims 4 to 7, **characterized by** the fact that the walls of the cavity (27) in 'V' shape form an angle γ between 40 and 60° with the longitudinal plane of symmetry (20) of the chain (51).

9. Pin conveyor according to any of claims 1 to 8, **characterized by** the fact that the free ends of the branches (28) of the V-shaped securing part (26) have cutting edges (29).

10. Pin conveyor according to any of claims 1 to 9, **characterized by** the fact that the retaining part (26) incorporates a reinforcement strut (30) of which the ends are secured to, respectively, the base of the V-shaped part (26) and a roller (23) capping a bush (22), in which the articulation pin extends (25) between the outer link (18) and a contiguous inner link (17).

11. Application of the pin conveyor in accordance with any of claims 1 to 10, with a poultry cutting device incorporating a pin conveyor (12) consisting of a frame (13) bearing one or more motors (14) driving toothed pinions, between which there is a tensioned chain (15), hooks (31) integrated with the carriages (32) conveyed sideways along a rail (33) extending above the pin conveyor (12), with the said hooks (31) articulated in pairs with the carriages (32), such that the said hooks (31) extend either side of the rail (33), and a slide (34) positioned between the rail (33) and the chain (15) of the pin conveyor (12), with the said slide (34) extending just above the said chain (15), in the plane of the latter.

12. Poultry-cutting device in accordance with claim 11, **characterized by** the fact that the hooks (31) intended to receive the ends of the chicken legs are conveyed sideways at a speed V1, in the same direction as the direction of advance of the chain (15) of the pin conveyor (12), with the conveyance speed V2 of the chain (15) being greater than the speed V1 of the hooks (31), and preferably equal to 2 times V1.
